Europäisches Patentamt

(19) European Patent Office

Office européen des brevets

(11) EP 0 760 252 A1

(12) EUROPEAN PATENT APPLICATION

(43) Date of publication:
05.03.1997 Bulletin 1997/10

(51) Int. Cl.6: **B01D 71/82**, B01D 71/52,
B01D 71/68, B01D 61/36,
C10G 31/11

(21) Application number: 96202342.0

(22) Date of filing: 23.08.1996

(84) Designated Contracting States:
AT BE CH DE DK ES FI FR GB GR IE IT LI NL PT SE

(30) Priority: 25.08.1995 NL 1001062

(71) Applicant: NEDERLANDSE ORGANISATIE VOOR TOEGEPAST-NATUURWETENSCHAPPELIJK ONDERZOEK TNO
2628 VK Delft (NL)

(72) Inventors:
• Tinnemans, Aloijsius Henricus Antonius
  3707 BG Zeist (NL)
• Buijs, Henricus Carolus Willibrordus Maria
  2651 SL Berkel en Rodenrijs (NL)
• Koenhen, Dirk Marinus
  7701 RS Dedemsvaart (NL)

(74) Representative: Kupecz, Arpad
Octrooibureau Los en Stigter B.V.
Postbox 20052
1000 HB Amsterdam (NL)

(54) **A membrane and method for the separation of aromatic hydrocarbons from a mixture of various aromatic hydrocarbons or from a mixture of such aromatic hydrocarbons and non-aromatic hydrocarbons**

(57) The invention relates to membranes and to a method for the separation of aromatic hydrocarbons from a mixture of various aromatic hydrocarbons or from a mixture of such aromatic hydrocarbons and non-aromatic hydrocarbons. According to the invention the membrane is formed from a polymer whose backbone comprises aromatic centres and one or more of the aromatic centres comprise polar groups.

The backbone is preferably an aromatic polyether ketone.

The membrane can be modified by radiation, thermal treatment and chemical reaction or a combination of these.

Figure 1

## Description

The invention relates to a membrane for the separation of aromatic hydrocarbons from a mixture of various aromatic hydrocarbons or from a mixture of such aromatic hydrocarbons and non-aromatic hydrocarbons, as well as to a method for the separation of aromatic hydrocarbons from a mixture of various aromatic hydrocarbons or from a mixture of such aromatic hydrocarbons and non-aromatic hydrocarbons.

It is noted that aromatic hydrocarbons are generally separated from a mixture of aromatic hydrocarbons and aliphatic hydrocarbons by means of distillation and/or extraction. With respect to saving energy, these methods are inefficient in comparison with pervaporation. In particular if the aliphatic/aromatic components have similar vapour pressures so that they form azeotropes as, for instance the benzenecyclohexane system, pervaporation is especially useful for the separation of mixtures which contain the aromatic component to be removed in low a concentration, namely at least lower than 50% by weight.

There are many polymer membranes which are known to exhibit a different solubility and transport behaviour compared with organic molecules, and many of these seem to be suitable as pervaporation membranes. Some of the membranes suggested to be suitable under pervaporation conditions include isotropic membranes, asymmetric membranes and thin-film composite membranes.

I. Cabasso (Organic liquid mixtures separation by permselective polymer membranes. 1. Selection and characterization of dense isotropic membranes employed in the pervaporation process, *Ind. Eng. Prod. Res. Dev., 22, 313-319 (1983)),* has studied alloy membrane films consisting of polymer mixtures based on cellulose acetate which may or may not be cross-linked, with a high degree of molecular entanglement due to interpolymeric mixing of two compatible networks. It was found, for instance, that when separating benzene/cyclohexane, a 20 $\mu$m film of cellulose acetate/poly[styrene(diethyl)phosphonate] exhibited selectivities up to 12-40 with the corresponding fluxes up to 0.8-1 kg $\cdot$ m$^{-2}$ $\cdot$ hour$^{-1}$ for a 50/50% by weight mixture. However, the development of high flux anisotropic membranes based on the abovementioned attractive materials did not prove to be a success.

A number of patents to the name of Exxon (EP 0 312 374, EP 0 312 375, EP 0 312 379, US 5,063,186, EP 0 312 376, US 5,030,355, EP 0 312 377, EP 0 312 378, US 4,929,357, US 4,983,338) and Bayer (EP 0 398 093, EP 0 336 241, US 4,115,-465, DE 3,927,787) show that basically polyurethane elastomers or their alloys are suitable as pervaporation membrane materials for the separation of aromatic and aliphatic hydrocarbons. Both anisotropic elastomer membranes and thin-film composite membranes have been described. In the latter case a thin active selective layer (< 1$\mu$m) is applied to a micro-porous carrier substrate by suspension deposition or by deposition from solution, allowing the solvent to evaporate and/or allowing it to pass through the thick permeable carrier layer. The membrane's properties are comparable to those described above. However, an important disadvantage is that in particular the selectivity is too low to eliminate small quantities of aromatic volatile components from aliphatic mixtures.

Only few systematic studies have been carried out to determine the relationship between the chemical properties of a membrane and its separation ability. For instance, the performance of elastomeric polyurethane membranes is dominated by the physicochemical properties of the soft segment matrix phase of the non-porous separation layer, in particular the chemical composition, the ratio hard and soft segments, cross-linking density and the glass transition temperature (H. Ohst, K. Hildenbrand, R. Dhein, Polymer structure/properties-correlation of polyurethane PV-membranes for aromatic/aliphatic separation, *Proceedings of the 5th International Conference on Pervaporation Processes in the Chemical Industry*, Heidelberg, Germany, March 11-15, 1991).

The capacity of polyurethane-imide membranes to separate aromatics and non-aromatics has also been examined (B.A. Koenitzer, US 4,929,358 to Exxon Research and Engineering Co., Polyurethane-imide, membranes and their use for the separation of aromatics from non-aromatics).

Polyimide/aliphatic polyester copolymers having various hard and soft segments (US 4,990,275, US 4,994,880), as well as polyimide/aliphatic polyesters copolymers without carboxyl groups (US 5,241,039) have been evaluated as membrane material. The advantage of all these materials is, for instance, that they have a higher aromatic/saturated selectivity than polyurethanes It is noted that only polymer films have been evaluated.

Other membrane materials very recently patented by Exxon comprise polyesters (US 4,976,868), polyarylates (US 5,012,036), sulphonated polysulphons (US 5,055,631), polycarbonates (US 5,019,666) and polyphthalate carbonates (US 5,012,035), thermally cross-linked nitrile-rubber membranes (US 4,885,096) and multi-block polymers (PCT/US 91/08494, US, 5,039,417, US 5,039,418, US 5,039,422, US 5,049,281) having a first prepolymer - an imide or amide acidic prepolymer (US 5,039,417), an oxazolidon prepolymer (US 5,039,418), a urea prepolymer (US 5,039,422) or a prepolymer produced by combining epoxy with diamine ((US 5,049,281) - which was extended with a compatible second prepolymer. For instance, pervaporation experiments of toluene/i-octane (50/50% by w/w) at 100°C have shown, that cross-linked polycarbonate films (thickness 30-50 $\mu$m) possess separation factors ($\beta$) of 34-77 and a flux rate of 66-7,7 kg $\cdot$ $\mu$m $\cdot$ m$^{-2}$ $\cdot$ h$^{-1}$.

Recently an article appeared about the use of a membrane formed from plasma-polymerizing monomers (US 5,207,-909). According to a preferred embodiment the membrane is a plasma polymer film, formed from plasma which is able to polymerize the 2,4-pentane-dion monomer. For instance, pervaporation experiments of toluene/i-octane (50/50% by w/w) at 100°C show, separation factors ($\beta$) of 35 and a flux of 1.2 kg $\cdot$ $\mu$m $\cdot$ m$^{-2}$ $\cdot$ h$^{-1}$ at a feed pressure of 1 bar.

The permeation and pervaporation behaviour of benzene-cyclohexane mixtures was also examined by using poly[bis(2,2,2-trifluoroethoxy)phosphazene] membranes (F. Suzuki, K. Onozato, H. Yeagashi, Pervaporation of organic solvents by poly[bis(2,2,2-trifluoroethoxy)phosphazene] membrane, *J. Appl. Polym. Sci. 34, 2197 (1987)*. The separation properties of this membrane are comparable with the polyphosphonate membranes of Cabasso et al. (I. Cabasso, J. Jagur-Grodzinski, D. Vofsi, A study of permeation of organic solvents through polymeric membranes based on polymeric alloys of polyphosphonates and acetyl cellulose. II. Separation of benzene, cyclohexene, and cyclohexane, *J. Appl. Polym. Sci., 18, 2137 (1974)*; I. Cabasso, J. Jagur-Grodzinski, D. Vofsi, Polymeric alloys of phosphonated polystyrene or polyphenylene oxide with cellulose ester, polystyrene, or unsaturated polyester, US 4,073,754) having a separation factor of 12. The permeation fluxes of pure benzene and pure cyclohexane were 7.0 and 0.46 kg $\cdot$ $\mu$m $\cdot$ m$^{-2}$ $\cdot$ h$^{-1}$ respectively.

As alternative, US 4,802,987 discloses moreover the application of liquid membranes for the separation of aromatics from saturated hydrocarbons by using cellulose or cellulose acetate membranes impregnated with polyethylene glycol. In order to obtain high aromatic selectivity and high flux, the amount and type of polyethylene glycol must be carefully adjusted.

Apart from the above-mentioned examples, the pervaporation method was also successfully applied for the separation of alkyl aromatics from aromatic solvents and for the separation of alkyl aromatic isomers by using preferably asymmetrical, dense polyimide membranes (EP 0 160 140).

The separation of aromatic hydrocarbons from mixtures of aromatic and non-aromatic hydrocarbon mixtures under pervaporative conditions was improved by controlling the oxygen present in the feed mixture (US 5,095,171), for instance by adding small amounts of oxygen scavengers, such as hindered phenols, to the starting mixture.

Other methods for the separation of aromatic hydrocarbons from mixtures of aromatic and non-aromatic hydrocarbons use membranes under reversed osmosis, perstraction or pervaporation conditions (J.R. Sweet, C.P. Darnell, GB 2,268,186 to EXXON Research and Engineering Co., Membrane/hydrocracking process for improved feedstock utilization in the production of reduced emissions gasoline) or under perstraction conditions, for instance, for the removal of multiring aromatics from the lubrication distillate (L.E. Black, R.C. Schucker, US 4,962,271 to EXXON Research and Engineering Co., Selective separation of multi-ring aromatic hydrocarbons from distillates by perstraction).

For a more detailed explanation of the terms perstraction and pervaporation reference is made to the US patent 5,055,631 column 2, from line 23.

It is the aim of the invention to provide membranes which are suitable for the separation of aromatic hydrocarbons from a mixture of various aromatic hydrocarbons or from a mixture of such aromatic hydrocarbons and non-aromatic hydrocarbons having good selectivity and flux.

To this end the invention provides membranes for the separation of aromatic compounds from a mixture of aromatic compounds and/or non-aromatic compounds, characterized in that the membrane is formed from a polymer whose backbone comprises aromatic groups and the aromatic centre comprises polar groups.

Both the separation factor and flux of the membranes according to the invention are good.

The membrane is preferably prepared from a polymer whose backbone is an aromatic polyether ketone.

Usually the polyether ketone is PEK, PEKK, PEEK, PEKEK, PEEKK, etc.

Usually the backbone of the polymer is 2,6-di-C$_1$-C$_{12}$ alkyl-1,4-phenylene oxide or 2,6-diphenyl-1,4-phenyl oxide.

Good results are obtained when the backbone is 2,6-dimethyl-1,4-phenylene oxide.

It is further advantageous if the backbone is polysulphon, polysulphonate or polyphenylene sulphide.

The polar groups present in the aromatic centre are SO$_2$Cl or groups derived therefrom, such as SO$_3$H or alkali metal salts derived therefrom, SO$_2$OR, in which R is a C$_1$-C$_{12}$ alkyl, benzyl or phenyl, SO$_2$NR$_1$R$_2$, in which R$_1$ and R$_2$ may or may not be identical, and C$_1$-C$_{12}$ represents alkyl, benzyl or aryl.

It is noted that the membrane properties may be modified by chemical reaction, radiation with electrons, heating, or a combination of these. For instance, an SO$_2$Cl group may be cross-linked with a diamine.

A particularly useful membrane is a membrane formed from N,N-dioctylpolyether etherketone sulphonamide subjected to a subsequent electron treatment.

It is also possible to favourably influence the membrane properties, in particular of sulphonated or chlorosulphonated polysulphon or poly(2,6-dimethyl-1,4-phenylene oxide), by chemically treating the membrane, or by subjecting the membrane to a subsequent thermal treatment.

The membrane according to the invention is especially suitable for utilization as composite membrane, where the membrane is applied to a carrier which, with regard to the mixture to be separated, is an inert carrier.

The inert carrier is usually an aromatic polyamide, polyimide or polyether amide material.

The carrier is preferably applied to an inert non-woven, such as PET, PP and preferably PPS.

The invention comprises further a method for the separation of aromatic hydrocarbons from a mixture of various aromatic hydrocarbons or from a mixture of such aromatic hydrocarbons characterized in that the membrane is formed from a polymer, whose backbone comprises aromatic centres and one or more of the aromatic centres comprise polar groups.

Basically, mixtures containing at least 1% by weight of aromatic hydrocarbons were used in the separation.

As a rule, the aromatic hydrocarbons separated in accordance with the invention are benzene, alkyl aromatics, such as toluene, etc.

It is noted that the membrane according to the invention is prepared according to a method of the prior art.

The membrane may occur in a variety of configurations and may be applied in a variety of shapes. The membrane may be flat or tubular. Flat membranes may be used rolled up into a spiral or as flat plates. Tubular and hollow fibre membranes, on the other hand, may be used in a bundled configuration.

A pervaporation test device was used having four membrane cells, which device was designed and constructed such that characterization of the membranes could be carried out on laboratory scale, with controllable concentration polarization and at a temperature up to 120°C.

The permeate was collected for analysis in a container, cooled with liquid nitrogen. Only a little of the permeate is extracted in order to minimize the effects of concentration polarization and temperature loss for the benefit of the pervaporation process. The downward permeate pressure is kept constant within 2 mbar with the aid of a vacuum pump and a valve provided between the condensers and the pump.

The basic properties of the membrane were determined by measuring the permselectivity with toluene/i-octane mixtures composed at ratios of 15/85 to 5/95% by w/w. Measurements commenced after allowing the membrane film to acclimatize in the test cell for 1 hour at 90°C. The actual duration of the determination was usually 1 to 5 hours, depending on the permeate flux.

In the event that the experiment lasted several days, the vacuum was cancelled at the end of each working day, the temperature of the feed mixture was brought to ambient temperature, while the mixture was kept in contact with the membrane surface.

Preceding the experiment the membrane was conditioned by allowing the film first to swell in a toluene-i-octane mixture of 5/95% w/w during 24 hours at 90°C, unless stated otherwise. This swelling time is presumed to suffice for the film to reach optimal swelling.

The composition of the mixture and of the permeate samples was determined by refractometry. The permeate fluxes were determined by weighing the permeate samples in the cold trap.

The required capacity of a membrane for the pervaporation of a toluene/i-octane mixture is expressed by a separation factor $\beta$. The separation factor $\beta$ is defined as

$$\beta_{pervap} = \beta(toluene/i\text{-}octane) = \frac{C_{toluene}^{P}}{C_{i\text{-}octane}^{P}} / \frac{C_{toluene}^{F}}{C_{i\text{-}octane}^{F}} \text{ or } C_{tol}^{P} / (1\text{-}C_{tol}^{P}) / C_{i\text{-}oct}^{F} / (1\text{-}C_{i\text{-}oct}^{F})$$

The specific permeation fluxes are expressed by:

$$F_{total} = [m_{total} * l] / [A * t] \ [kg.\mu m.m^{-2}.h^{-1}]$$

m    is the total amount of collected permeate [kg]
l    is the membrane thickness [$\mu$m]
A    is the membrane surface [$m^2$]
t    is time [h]

The specific permeate fluxes are used to compare various polymer film materials, assuming the flux of the permeate to be inversely proportional to the membrane thickness.

Finally the membranes according to the invention are cast according to a method of the prior art, which is as follows.

A suitable casting solution (usually 8-15% by weight) was cast over a glass plate with the aid of a doctors knife to form a series of homogenous symmetrical films (about 15-50 $\mu$m). For this purpose an amount of casting polymer was dissolved under agitation at raised temperature. Prior to casting, the casting solution was filtered through a pressure filter at 4 bar. The polymer solution was then left overnight in order to let air bubbles escape. The cast films (casting thickness: 150-250) were dried for about 1 hour in an oven without air circulation at a suitable temperature and finally for 16 hours at a higher temperature in order to remove the remaining solvent rests. The films were easy to remove from the glass plate with the aid of the capillary force of water (or other non-solvent for the polymer).

To obtain high-quality polymer films it is very important to carefully clean the glass plate. To this end the glass plate was first cleaned with a detergent and water and subsequently with reversed osmosis water. The glass plate was then sprayed with ethanol and left to dry at room temperature with the casting side facing down in order to avoid dust impurities.

Before the glass plate was used the casting side was cleaned with a soft paper tissue moistened with ethanol. The plates should be cleaned from the top downward, catching the dust at the base. The plate was then wiped dry with a fresh paper tissue by the same wiping movement. The glass plate was then placed into a casting box onto four carriers, with the casting side facing upward and after about 15 minutes it was used for casting. The casting box should be as clean as possible and should be sealed. The bottle containing the filtered polymer solution and the doctors knife were also put into the casting box.

The invention will now be further elucidated by the following non-limitative examples.

Example I

A polyether etherketon sulphonamide was prepared by reacting chlorosulphonated poly(phenylether etherketon) with a stoichiometric amount of diethylamine. The degree of substitution of the resulting polymer (PEEK-$SO_2N(ethyl)_2$) was 0.8. Of this polymer 6.7 g were dissolved in 62 g methylene chloride under stirring, by boiling under reflux. After cooling the solution was filtered under a pressure of 4 bars over a prefilter (GF92, Schleicher & Schuell) and a 10 $\mu$m polypropylene filter (Gelman) respectively. The solution was left to stand for one night and then spread with doctors knife onto a glass plate. After the film was cast, it was placed into an oven without air circulation for 1 hour at 65°C, then into an oven with air circulation for 4 hours at 90°C, and finally under vacuum for 16 hours at 100°C. The membrane was removed from the glass plate by immersion in water. Subsequently the membrane was dried in the open air.

After conditioning for 24 hours in the feed mixture at 90°C, the pervaporation properties of the 35 $\mu$m thick membrane were determined at 90°C for a mixture of 5% by weight of toluene and 95% by weight of iso-octane, resulting in a separation factor of 30 and a normalized flux of 0.5 kg.$\mu$m.m$^{-2}$.hour$^{-1}$.

Example II

A polyether etherketon sulphonamide was prepared by reacting chlorosulphonated poly(phenylether etherketon) with a stoichiometric amount of di-n-octylamine. The degree of substitution of the resulting polymer (PEEK-$SO_2N$(n-octyl)$_2$) was 0.8. Of this polymer 7.5 g were dissolved under stirring in 49.9 g chloroform by boiling for 3 hours at 70°C. After cooling the solution was filtered under a pressure of 4 bars over a prefilter (GF-92, Schleicher & Schuell) and a 2.7 $\mu$m polypropylene filter (GF/D, Whatman) respectively. The solution was left to stand for one night and then spread with a doctors knife onto a glass plate. After the film was cast, it was placed into an oven without air circulation for 1 hour at 65°C, then into an oven with air circulation for 4 hours at 90°C and finally under vacuum for 16 hours at 100°C. The membrane was removed from the glass plate by immersion in water. The membrane was subsequently dried in the open air. After that the membrane was modified by use of a 175 kV Electrocurtain Electron Beam system (ESI, Model CB 150/15/180L). The sample was irradiated in discrete steps with doses up to 120 Mrad. As the maximum irradiation dose in one run was 30 Mrad, several successive runs were necessary.

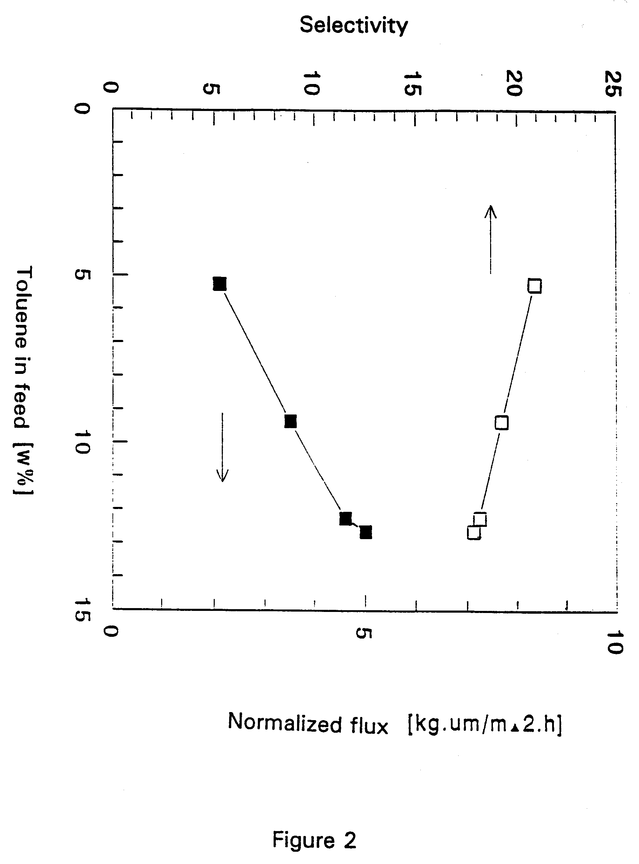

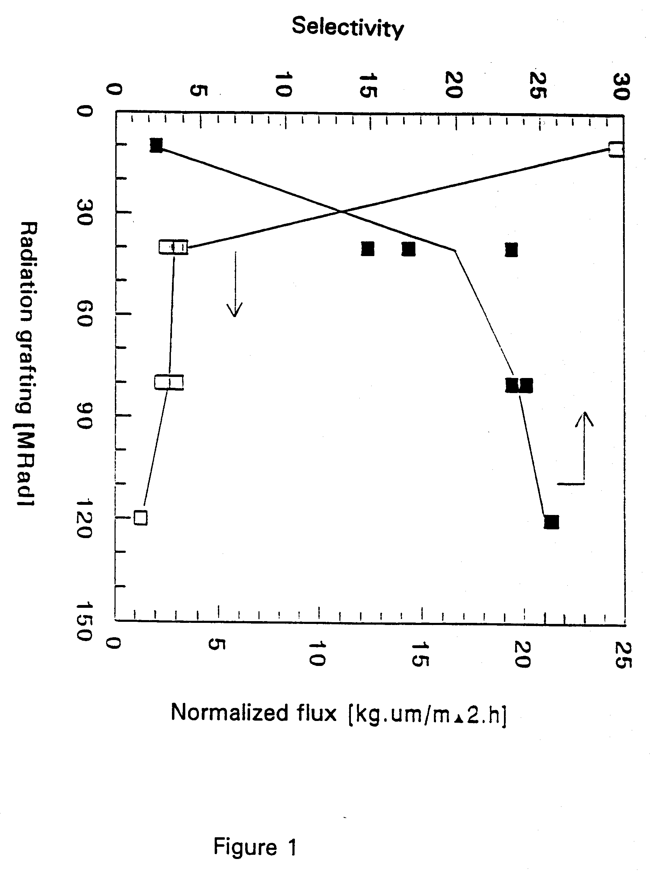

The pervaporation properties of the 15-20 $\mu$m thick membrane were determined at 90°C for a mixture of 5% by weight of toluene and 95% by weight of iso-octane. Before the determination the membrane was conditioned for 24 hours in the feed mixture at 90°C. The results of the pervaporation experiments are recorded in Figure 1.

Comparative Example IIa

The procedure of Example II was repeated except that the membranes were not modified by electron irradiation. The membrane disintegrated under the pervaporation conditions as described in Example II.

Examples II and IIa show the favourable effect of membrane modification by electron irradiation on the separation factor.

Example III

A 16 $\mu$m thick membrane film was modified by irradiation with 60 Mrad electrons in the manner described in Example II.

The pervaporation properties of the membrane were determined at 90°C for a mixture of toluene and iso-octane, comprising 5-15% by weight of toluene. The results are recorded in Figure 2.

Example III shows that as the toluene content in the feed flow increases, the normalized flux increases, while the separation factor decreases.

Example IV

A polyether etherketon sulphonamide was prepared by reacting chlorosulphonated poly(phenylether etherketon) with 50 moles% di-n-octylamine calculated with regard to the degree of substitution of 0.8 of the chlorosulphonated pol-

ymer (PEEK-SO$_2$Cl). A 17 μm thick membrane film was prepared in the manner described in Example II.

Under the pervaporation conditions of Example II this membrane exhibited no solvent flux at 90°C for a mixture of 5.6% by weight of toluene and 94.4% by weight of iso-octane.

Example V

A polyether etherketon sulphonamide was prepared by reacting chlorosulphonated poly(phenylether etherketon) with a stoichiometric amount of dibenzylamine. The degree of substitution of the resulting polymer (PEEK-SO$_2$N(benzyl)$_2$)) was 0.8. A 15 μm thick membrane film was prepared in the manner described in Example II.

This membrane exhibited no solvent flux under the pervaporation conditions of Example IV.

Comparison of Examples I, IIa, IV and V shows how the type of substituent affects the solvent flux and separation factor.

**Claims**

1. A membrane for the separation of aromatic hydrocarbons from a mixture of various aromatic hydrocarbons or from a mixture of such aromatic hydrocarbons and non-aromatic hydrocarbons **characterized** in that the membrane is formed from a polymer, whose backbone comprises aromatic centres and one or more of the aromatic centres comprise polar groups.

2. A membrane according to claim 1 **characterized** in that the backbone is an aromatic polyether ketone.

3. A membrane according to claim 2 **characterized** in that the aromatic polyether ketone is PEK, PEKK, PEEK, PEKEK, PEEKK, etc.

4. A membrane according to claim 1 **characterized** in that the backbone is an aromatic polysulphonate.

5. A membrane according to claim 1 **characterized** in that the backbone is polyphenylene sulphide.

6. A membrane according to claims 1-5 **characterized** in that the polar groups are SO$_2$Cl or groups derived therefrom, such as SO$_3$H or alkali metal salts derived therefrom and/or SO$_2$OR, in which R is a C$_1$-C$_{12}$ alkyl, benzyl or aryl and/or SO$_2$NR$_1$R$_2$, in which R$_1$ and R$_2$ may or may not be identical and C$_1$-C$_{12}$ represents alkyl, benzyl or aryl.

7. A membrane according to claims 1-6 **characterized** in that the membrane is modified by radiation, thermal treatment and chemical reaction or a combination of these.

8. A membrane according to claim 7 **characterized** in that the membrane is formed from N,N-dioctylpolyether etherketone sulphonamide which has undergone a subsequent treatment of electron irradiation.

9. A membrane according to claims 1-8 **characterized** in that the membrane is a composite membrane, with the membrane being applied to a carrier which, with regard to the mixture to be separated, is an inert carrier.

10. A membrane according to claim 9 **characterized** in that the inert carrier is an aromatic polyamide, polyimide or polyether amide material.

11. A membrane according to claim 10 **characterized** in that the carrier is applied to an inert non-woven, such as PET, PP and preferably PPS.

12. A method for the separation of aromatic hydrocarbons from a mixture of various aromatic hydrocarbons or from a mixture of such aromatic hydrocarbons and non-aromatic hydrocarbons **characterized** in that the mixture is brought into contact with the permselective side of a membrane in accordance with any of the preceding claims 1-11 under pervaporation conditions or under perstraction conditions.

13. A method according to claim 12 **characterized** in that basically mixtures were used containing at least 1% by weight aromatic hydrocarbons.

14. A method according to claim 12 or 13 **characterized** in that the aromatic hydrocarbons separated from the mixtures are benzene, alkyl aromatics such as toluene, etc.

**15.** A method for the formation of membranes according to claims 1-14 **characterized** in that this is carried out by a method of the prior art.

Figure 2

Figure 1

European Patent
Office

**EUROPEAN SEARCH REPORT**

Application Number

EP 96 20 2342

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,X | US-A-5 055 631 (SARTORI)<br><br>* the whole document *<br>--- | 1,6,7,9,<br>12-15 | B01D71/82<br>B01D71/52<br>B01D71/68<br>B01D61/36 |
| X | EP-A-0 404 416 (EXXON)<br><br>* abstract; example 1 *<br>* page 3, line 15 - line 22 *<br>* page 4, line 3 *<br>* page 4, line 12 - line 21 *<br>--- | 1,6,<br>12-15 | C10G31/11 |
| X | US-A-4 596 860 (PERCEC)<br>* abstract *<br>* column 3, line 19 - column 4, line 41 *<br>* column 7, line 10 - column 8, line 40 *<br>* column 9, line 50 - column 10, line 2 *<br>--- | 1,5,6,15 | |
| X | US-A-5 348 569 (BIKSON)<br><br>* abstract; claims 3,7-11,21 *<br>* column 6, line 1 - column 7, line 22 *<br>* column 8, line 3 - line 16 *<br>* examples 3,6 *<br>--- | 1,6,7,<br>9-11,15 | |
| X | EP-A-0 202 841 (ICI)<br><br>* abstract; claims *<br>* page 3, line 3 - page 9, line 21 *<br>* example 1 *<br>--- | 1-3,6,7,<br>9,15 | TECHNICAL FIELDS<br>SEARCHED (Int.Cl.6)<br><br>B01D<br>C10G |
| X | EP-A-0 331 298 (ICI)<br><br>* abstract; claims 1-9 *<br>* page 2, line 1 - page 5, line 50 *<br>* examples 1,2,5 *<br>--- | 1-3,5-7,<br>9,15 | |
| | -/-- | | |

The present search report has been drawn up for all claims

| Place of search | Date of completion of the search | Examiner |
|---|---|---|
| THE HAGUE | 30 September 1996 | Hoornaert, P |

EPO FORM 1503 03.82 (P04C01)

| | European Patent Office | EUROPEAN SEARCH REPORT | Application Number EP 96 20 2342 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | JOURNAL OF POLYMER SCIENCE: POLYMER CHEMISTRY EDITION, vol. 23, no. 8, August 1985, NEW-YORK, USA, pages 2205-2223, XP002004491 M. I. LITTER: "Polyaromatic Ether-Ketones and Polyaromatic Ether-Ketone Sulfonamides" * abstract * * page 2205, line 1 - page 2206, paragraph 1 * * page 2221, line 1 - page 2222, last line * --- | 1-3,6,15 | |
| X | CA-A-1 234 764 (HUANG) * claims 1-7 * * page 1, line 37 - page 2, line 13 * * examples 1-3 * ----- | 1,6,7,9, 15 | |
| | | | TECHNICAL FIELDS SEARCHED (Int.Cl.6) |

The present search report has been drawn up for all claims

| Place of search | Date of completion of the search | Examiner |
|---|---|---|
| THE HAGUE | 30 September 1996 | Hoornaert, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document